# FASCICULE DE BREVET EUROPEEN

(11) **EP 0 998 011 B1**
(45) Date de publication et mention de la délivrance du brevet: **16.07.2008**
(21) Numéro de dépôt: 99402705.0
(22) Date de dépôt: 29.10.1999
(51) Int. Cl.: H02K 5/24, H02K 9/06, H02K 15/085

(54) **Machine électrique tournante à bruit aéraulique réduit, notamment alternateur de véhicule automobile, et procédé de fabrication de son stator**
Drehende elektrische Maschine mit verringerten Kuhlluftgeräuschen, i.e. ein Fahrzeuggenerator, und Herstellungsverfahren seines Stators
Rotating electric machine with reduced airborne noise, namely a vehicle alternator, and manufacturing process of its stator

(30) Priorité: 29.10.1998 FR 9813721
(43) Date de publication de la demande: 03.05.2000
(60) Demande divisionnaire: 07123522.0
(73) Titulaire: VALEO EQUIPEMENTS ELECTRIQUES MOTEUR, 94017 Creteil (FR)
(72) Inventeur: Grand, Pierrick, 77420 Champs sur Marne (FR); Couvert, Pascal, 94700 Maisons Alfort (FR)

(56) Documents cités:
- EP-A- 0 198 095
- EP-A- 0 751 609
- FR-A- 2 734 960
- FR-A- 2 738 414
- PATENT ABSTRACTS OF JAPAN vol. 097, no. 011, 28 novembre 1997 (1997-11-28) & JP 09 191594 A (TOSHIBA CORP), 22 juillet 1997 (1997-07-22)
- PATENT ABSTRACTS OF JAPAN vol. 096, no. 002, 29 février 1996 (1996-02-29) & JP 07 288944 A (MEIDENSHA CORP), 31 octobre 1995 (1995-10-31)

## Description

La présente invention concerne d'une façon générale les machines tournantes, et en particulier les alternateurs de véhicules automobiles.

Alors que pendant de nombreuses années la conception des alternateurs avait pour objectif de réaliser des machines ayant un bon rendement pour un poids et un encombrement limité, et susceptibles de tourner à des vitesses de rotation élevées, on se préoccupait relativement peu du bruit que ces alternateurs engendraient, qui était relativement faible par rapport à celui du moteur à combustion du véhicule, situé à son voisinage.

Or on tend de nos jours à réduire les sources de bruit dans un véhicule automobile, y compris au niveau de l'alternateur, sachant que le bruit cumulé s'en trouvera, même si c'est à un degré limité, également réduit.

On connait par la demande de brevet FR 2 734 960 un moteur électrique pour volet roulant avec des chignons d'enroulement de stator maintenus grâce à des coiffes.

La présente invention consiste en une nouvelle démarche, particulièrement simple et économique à mettre en oeuvre au cours du processus de fabrication d'une machine telle qu'un alternateur (ou encore un alterno-démarreur), qui permette de réduire de façon sensible le bruit d'origine aéraulique lors de la rotation de la machine, en jouant en particulier sur certaines composantes harmoniques de ce bruit.

Un objet secondaire de la présente invention est, par cette même démarche, de faciliter dans certains cas le positionnement du stator dans l'ensemble formé par les paliers avant et arrière.

Ainsi la présente invention propose selon un premier aspect une machine électrique tournante, en particulier un alternateur de véhicule automobile, selon la revendication 1.

Avantageusement, les chignons situés d'un côté opposé au côté d'entraînement (côté dit arrière, opposé à la poulie) de l'arbre de rotor débordent davantage que les chignons situés du côté d'entraînement.

En outre, la différence entre les étendues axiales sur lesquelles les chignons débordent d'un côté et de l'autre de la carcasse de stator est préférentiellement comprise entre environ 4 et environ 8 mm.

Selon un autre aspect, l'invention propose un procédé de fabrication d'un stator d'une machine électrique tournante telle qu'un alternateur de véhicule automobile à bruit de fonctionnement d'origine aéraulique réduit, le stator comportant une carcasse de révolution autour d'un axe de rotation de la machine, qui reçoit des bobinages de stator, caractérisé en ce qu'il comprend les étapes consistant à :
- enrouler des bobinages de stator dans des logements formés dans la carcasse avec un jeu contrôlé, en formant à cette occasion un structure de bobinages essentiellement rigide possédant deux ensembles de chignons débordant respectivement au delà de deux faces d'extrémités axiales de la carcasse, et
- déplacer ladite structure de bobinages dans une direction essentiellement parallèle audit axe de rotation.

On réalise l'étape de déplacement préférentiellement en exerçant un effort de poussée sur l'un des ensembles de chignons.

Ce déplacement s'effectue par exemple sur une distance comprise entre environ 2 et 4 mm.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est une vue en coupe axiale d'un alternateur de véhicule automobile réalisé selon l'invention, et
la figure 2 est un graphique illustrant l'amélioration réalisée par la présente invention en termes de niveau de bruit aéraulique en fonction de la vitesse de rotation.

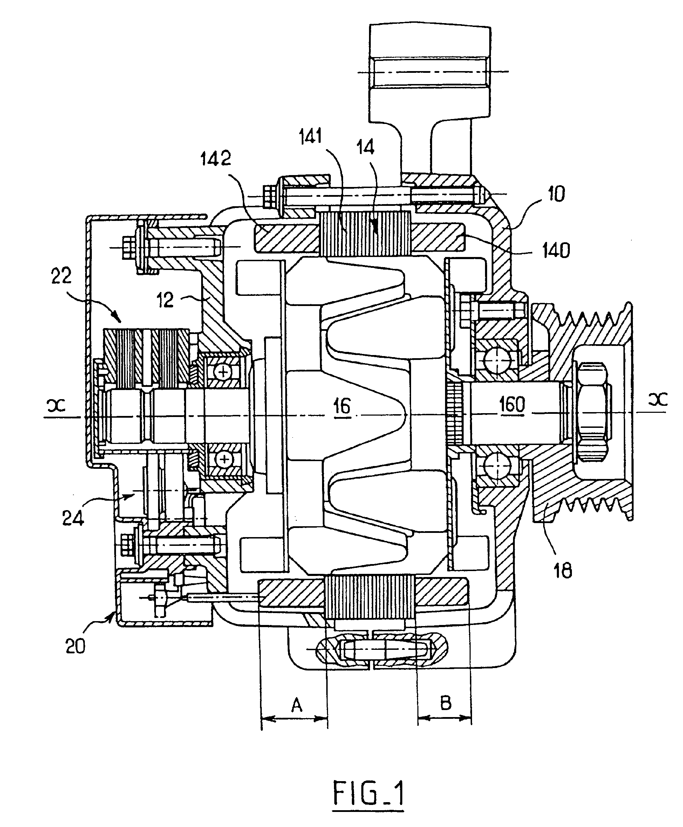

En référence tout d'abord à la figure 1, on a représenté un alternateur de véhicule automobile qui comprend, de façon classique en soi, un palier avant 10 et un palier arrière 12 assemblés en emprisonnant la carcasse 141 d'un stator 14, et recevant un rotor 16 monté sur un arbre de rotor 160 lui-même monté dans les paliers avant et arrière par l'intermédiaire de roulements à billes pour tourner autour d'un axe x-x. L'arbre de rotor 160 porte à son extrémité avant une poulie 18 pour l'entraînement en rotation de l'alternateur.

Du côté arrière, l'alternateur comporte un capot 20 abritant différents organes tel qu'un ensemble porte-balais 22 et un pont redresseur globalement désigné par la référence 24.

La carcasse 141 du stator, réalisée de façon classique par empilage de tôles, possède une pluralité d'encoches (non visibles) dans lesquels les bobinages de stator sont enroulés. De façon classique, ces bobinages forment de part et d'autre de la carcasse en direction axiale deux chignons, à savoir un chignon avant 140 et un chignon arrière 142.

On a constaté que lorsque ces chignons adoptaient des géométries non symétriques par rapport au plan transversal médian de la carcasse de stator 141, alors l'émission de bruit globale, d'origine aérodynamique, de l'alternateur s'en trouvait réduite dans des proportions notables. Après analyse de ce phénomène, on a constaté que cette dissymétrie des chignons 140, 142 provoquait une diminution sensible de la composante de bruit correspondant à l'harmonique de rang 12. Ceci corrobore parfaitement le fait que le bruit global peut être diminué de façon particulièrement sensible pour l'oreille humaine si l'on diminue les composantes harmoniques de rang faible à moyen (le rang 12 étant considéré comme rang moyen).

Selon un mode de réalisation préféré de l'invention, cette dissymétrie des chignons est réalisée en bobinant les enroulements de stator de la façon usuelle pour réaliser une structure de bobinages relativement compacte et rigide, mais avec un certain jeu axial par rapport à la carcasse, et en exerçant ensuite un effort de déplacement sur les chignons situés d'un côté, et donc sur l'ensemble de la structure de bobinages, y compris les chignons opposés dans une direction parallèle à l'axe de rotation de l'alternateur de manière à ce que les chignons situés dudit côté opposé, en l'espèce les chignons arrière 142, débordent davantage par rapport à la face latérale arrière de la carcasse que les chignons avant 140 par rapport à sa face latérale avant. Ainsi la figure 1 montre qu'après ce déplacement, l'étendue des chignons arrière 142 par rapport à la face arrière de la carcasse 141 (distance A) est supérieure à l'étendue (distance B) des chignons avant du côté opposé.

Concrètement, on commence à obtenir des résultats significatifs en termes de réduction du bruit lorsque la différence entre les distances A et B atteint environ 4 mm, une réduction de bruit particulièrement notable étant obtenue lorsque cette différence est de 8 mm ou davantage. Ceci correspond à un déplacement effectif de la structure de bobinages sur une distance comprise entre 2 et 4 mm.

On peut également obtenir des résultats intéressants si l'on déplace la structure de bobinages dans le sens opposé, c'est-à-dire vers le côté avant (coté poulie) de la machine.

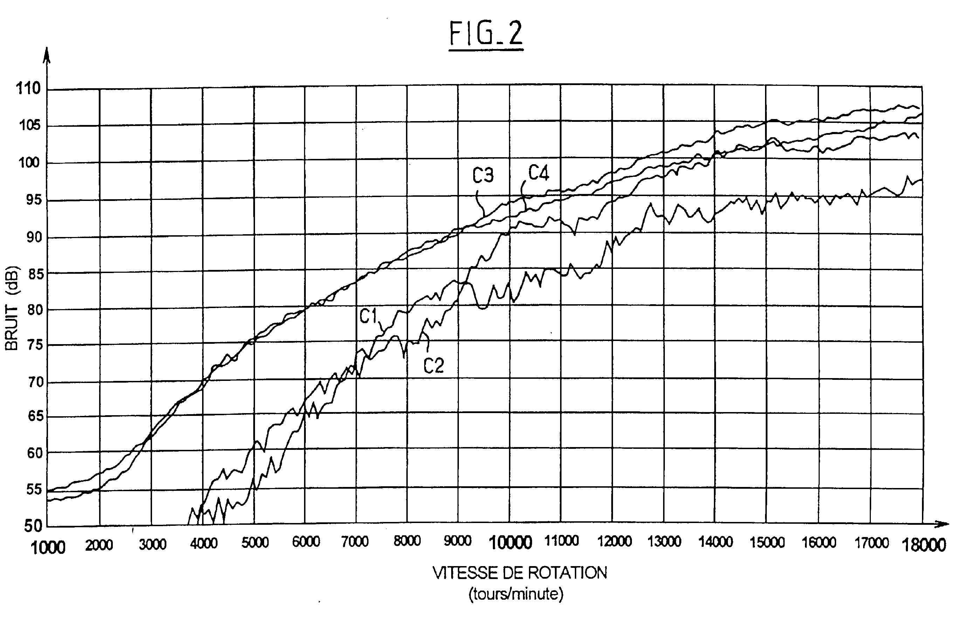

La figure 2 illustre, par un ensemble de courbes de bruit (exprimé en dB) en fonction de la vitesse de rotation de l'alternateur (exprimée en tours/minute), les performances en matière de réduction de bruit obtenues grâce à la présente invention.

Ainsi la courbe C1 illustre l'évolution de la composante harmonique de rang 12 du bruit avec un stator conventionnel, à chignons symétriques, tandis que la courbe C2 illustre l'évolution de la même composante harmonique avec un stator dont les chignons de bobinages ont la disposition illustrée sur la figure 1, avec A-B=4 mm.

On observe une diminution du bruit au niveau de cet harmonique qui est significative sur toute la plage de vitesses de rotation de l'alternateur, en atteignant de 5 à 8 dB pour les vitesses de rotation élevées.

Le niveau de bruit global avec un stator conventionnel est illustré par la courbe C3, tandis que le niveau de bruit global avec le stator de la figure 1 est illustré par la courbe C4.

On observe une diminution de ce bruit global qui peut atteindre 2 à 3 dB pour les vitesses de rotation élevées.

Ainsi, par des moyens particulièrement simples et économiques à mettre en oeuvre, et sans la moindre pièce additionnelle, on réalise une diminution substantielle du niveau de bruit de l'alternateur.

On notera également que, dans certains cas, le déplacement de la structure de bobinages de stator selon l'invention peut être mise à profit pour faciliter le positionnement du stator dans la machine.

## Revendications

1. Machine électrique tournante, en particulier alternateur de véhicule automobile, comprenant un rotor (16) monté sur un arbre de rotor (160) tournant autour d'un axe (x-x) et un stator (14), le stator comportant une carcasse (141) recevant des enroulements de stator qui définissent deux ensembles de chignons (140, 142) débordant respectivement au delà de deux faces d'extrémités axiales de la carcasse, **caractérisée en ce que** l'un (142) des ensembles de chignons déborde davantage en direction axiale par rapport à la face d'extrémité correspondante que l'autre ensemble de chignons (140) par rapport à l'autre face d'extrémité, de manière à diminuer le bruit de fonctionnement d'origine aéraulique, les enroulements de stator étant enroulés sur la carcasse avec un jeu axial controlé par rapport à la carcasse et les chignons pouvant être positionnés suite à un déplacement axial des enroulements par rapport à la carcasse.

2. Machine tournante selon la revendication 1, **caractérisée en ce que** les chignons (142) situés d'un côté opposé au côté d'entraînement de l'arbre de rotor (160) débordent davantage que les chignons (140) situés du côté d'entraînement.

3. Machine selon l'une des revendications 1 et 2, **caractérisée en ce que** la différence entre les étendues axiales (A, B) sur lesquelles les chignons débordent d'un côté et de l'autre de la carcasse de stator est comprise entre environ 4 et environ 8 mm.

4. Procédé de fabrication d'un stator d'une machine électrique tournante telle qu'un alternateur de véhicule automobile à bruit de fonctionnement d'origine aéraulique réduit, le stator (14) comportant une carcasse (141) de révolution autour d'un axe de rotation de la machine, qui reçoit des bobinages de stator, **caractérisé en ce qu'**il comprend les étapes consistant à :
- enrouler des bobinages de stator dans des logements formés dans la carcasse avec un jeu contrôlé, en formant à cette occasion une structure de bobinages essentiellement rigide possédant deux ensembles de chignons (140, 142) débordant respectivement au delà de deux faces d'extrémités axiales de la carcasse, et
- déplacer ladite structure de bobinages dans une direction essentiellement parallèle audit axe de rotation de manière à ce que l'un des ensembles de chignons déborde davantage en direction axiale que l'autre ensemble de chignons.

5. Procédé selon la revendication 4, **caractérisé en ce que** l'étape de déplacement est réalisée en exerçant un effort de poussée sur l'un (140) des ensembles de chignons.

6. Procédé selon l'une des revendications 4 et 5, **caractérisé en ce qu'**on effectue le déplacement sur une distance comprise entre environ 2 et 4 mm.

## Claims

1. Rotary electric machine, in particular a motor vehicle alternator, comprising a rotor (16) which is fitted onto a rotor shaft (160) which rotates around an axis (x-x) and a stator (14), the stator comprising a casing (141) which receives stator windings which define two leading-out wire assemblies (140, 142) which project respectively beyond two axial end surfaces of the casing, **characterised in that** one (142) of the leading-out wire assemblies projects further in the axial direction relative to the corresponding end surface than the other leading-out wire assembly (140) does relative to the other end surface, such as to reduce the operating noise of ventilation origin, the stator windings being wound onto the casing with controlled axial play relative to the casing, and the leading-out wires being able to be positioned after axial displacement of the windings relative to the casing.

2. Rotary machine according to claim 1, **characterised in that** the leading-out wires (142) which are situated on a side opposite the drive side of the rotor shaft (160) project further than the leading-out wires (140) situated on the drive side.

3. Machine according to one of claims 1 and 2, **characterised in that** the difference between the axial extents (A, B) by which the leading-out wires project from one side and the other of the stator casing is between approximately 4 and 8 mm.

4. Method for production of a stator of a rotary electric machine, such as a motor vehicle alternator with reduced operating noise of ventilation origin, the stator (14) comprising a casing (141) generated by revolution around an axis of rotation of the machine, which receives stator windings, **characterised in that** it comprises the steps consisting of:
- winding stator windings in receptacles which are formed in the casing with controlled play, whilst forming on this occasion a substantially rigid winding structure which has two leading-out wire assemblies (140, 142) which project respectively beyond two axial end surfaces of the casing; and
- displacing the said winding structure in a direction which is substantially parallel to the said axis of rotation, such that one of the leading-out wire assemblies projects further in the axial direction than the other leading-out wire assembly.

5. Method according to claim 4, **characterised in that that** displacement step is carried out by exerting thrust force on one (140) of the leading-out wire assemblies.

6. Method according to one of claims 4 and 5, **characterised in that** the displacement is carried out over a distance of between approximately 2 and 4 mm.

## Patentansprüche

1. Rotierende elektrische Maschine, insbesondere Wechselstromgenerator für Kraftfahrzeuge, umfassend einen Rotor (16), der auf einer um eine Achse (x-x) rotierenden Rotorwelle (160) gelagert ist, und einen Stator (14) mit einem Gehäuse (141), das Statorwicklungen aufnimmt, die zwei Spulenkopfgruppen (140, 142) definieren, die über zwei axiale Abschlussflächen des Gehäuses hinaus überstehen, **dadurch gekennzeichnet , dass** die eine Spulenkopfgruppe (142) im Verhältnis zu der entsprechenden Abschlussfläche in axialer Richtung weiter übersteht als die andere Spulenkopfgruppe (140) im Verhältnis zu der anderen Abschlussfläche, um die durch die Kühlluft bedingten Betriebsgeräusche zu verringern, wobei die Statorwicklungen auf dem Gehäuse mit einem kontrollierten axialen Spiel im Verhältnis zum Gehäuse gewickelt sind und wobei die Spulenköpfe im Anschluss an eine axiale Verschiebung der Wicklungen im Verhältnis zum Gehäuse positioniert werden können.

2. Rotierende elektrische Maschine nach Anspruch 1, **dadurch gekennzeichnet , dass** die Spulenköpfe (142), die sich auf einer der Antriebsseite der Rotorwelle (160) gegenüberliegenden Seite befinden, weiter überstehen als die auf der Antriebsseite befindlichen Spulenköpfe (140).

3. Maschine nach einem der Ansprüche 1 und 2, **dadurch gekennzeichnet , dass** die Differenz zwischen den axialen Ausdehnungen (A, B), um die die Spulenköpfe auf der einen bzw. auf der anderen Seite des Statorgehäuses überstehen, zwischen etwa 4 und etwa 8 mm liegt.

4. Verfahren zur Herstellung eines Stators einer rotierenden elektrischen Maschine, etwa eines Wechselstromgenerators für Kraftfahrzeuge mit verringerten durch die Kühlluft bedingten Betriebsgeräuschen, wobei der Stator (14) ein um eine Drehachse der Maschine rotationssymmetrisches Gehäuse (141) umfasst, das Statorspulen aufnimmt, **dadurch gekennzeichnet, dass** es die Verfahrensschritte beinhaltet, die darin bestehen:
- Statorspulen in Aufnahmen, die in das Gehäuse eingearbeitet sind, mit einem kontrollierten Spiel zu wickeln, wobei bei dieser Gelegenheit eine im Wesentlichen starre Spulenstruktur gebildet wird, die zwei Spulenkopfgruppen (140, 142) besitzt, die über zwei axiale Abschlussflächen des Gehäuses hinaus überstehen, und
- die besagte Spulenstruktur in einer zu der besagten Drehachse im Wesentlichen parallelen Richtung zu verschieben, so dass eine der Spulenkopfgruppen in axialer Richtung weiter übersteht als die andere Spulenkopfgruppe.

5. Verfahren nach Anspruch 4, **dadurch gekennzeichnet , dass** der Verfahrensschritt zur Verschiebung unter Ausübung einer Druckbeanspruchung auf eine (140) der Spulenkopfgruppen ausgeführt wird.

6. Verfahren nach einem der Ansprüche 4 und 5, **dadurch gekennzeichnet , dass** die Verschiebung über eine Entfernung zwischen etwa 2 und 4 mm durchgeführt wird.
